# EUROPEAN PATENT SPECIFICATION

(11) **EP 1 608 881 B1**
(45) Date of publication and mention of the grant of the patent: **10.10.2007**
(21) Application number: 04723243.4
(22) Date of filing: 25.03.2004
(51) Int. Cl.: F16C 11/06

(54) **A SPHERICAL BEARING ARRANGEMENT**
KUGELLAGERANORDNUNG
ENSEMBLE PALIER A ROTULE

(30) Priority: 31.03.2003 GB 0307425
(43) Date of publication of application: 28.12.2005
(73) Proprietor: Minebea Co. Ltd., Kitasaku-gun, Nagano 389-0293 (JP)
(72) Inventor: SMITH, Paul Raymond, NMB-Minebea UK Ltd., Lincoln LN6 3RA (GB); GOURDOL, Jerome, NMB-Minebea UK Ltd., Lincoln LN6 3RA (GB)
(74) Representative: Hoarton, Lloyd Douglas Charles
(86) International application number: PCT/GB2004/001295
(87) International publication number: WO 2004/088155

(56) References cited:
- EP-A- 0 781 932
- US-A- 3 243 239
- US-A- 5 033 722
- US-A- 5 902 050

## Description

This invention relates to a spherical bearing arrangement and more particularly to a spherical bearing incorporating an elastomeric portion.

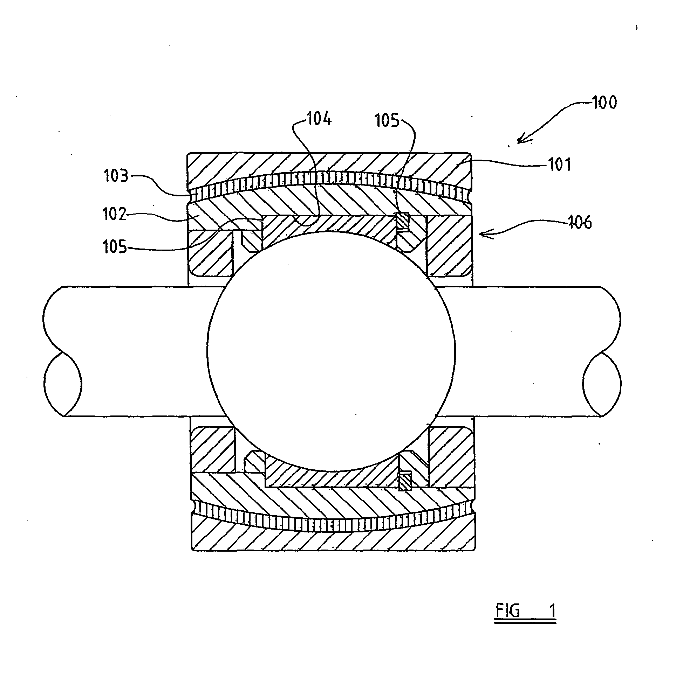

GB-A-2 263 948 discloses a so-called hybrid bearing 100 comprising an outer and middle housing 101,102 between which is sandwiched an annular rubber layer 103. The inner surface 104 of the middle housing 102 is formed with steps 105 to receive a multi-part inner housing 106 which is constructed within the middle housing 102. In the particular example shown in Figure 1 of the accompanying drawings of a hybrid bearing, the multi-part inner housing 106 is assembled and pushed into the middle housing 102 which has the rubber layer 103 bonded to its outer surface. The outer housing 101 is then swaged and bonded onto the rubber layer 103.

This construction is disadvantageous because it adds approximately 15% in diameter to a comparable non-hybrid bearing because of the additional parts necessary to contain the elastomeric part of the hybrid bearing. It is an object of the present invention to reduce the size of hybrid bearings and also to provide a method of manufacture which is simpler than conventional methods such as that disclosed in GB 2 263 948.

Accordingly, one aspect of the present invention provides a method of manufacturing a spherical bearing comprising the steps of swaging an inner housing on to a ball to curve the inner housing around the ball and surround the equator of the ball ; providing an annular elastomeric portion around an outer surface of the inner housing, the annular elastomeric portion also curving around the ball and surrounding the equator of the ball; and swaging an outer housing onto the elastomeric portion.

Preferably, the step of providing the annular elastomeric portion wherein the step of providing the annular elastomeric portion around the outer surface of the inner housing comprises bonding an elastomeric portion to the outer surface of the inner housing.

Conveniently, the elastomeric portion is applied by an injection process.

Another aspect of the present invention provides a spherical bearing arrangement having a bearing housing and a ball located therein, the bearing housing having an outer housing, an inner housing and an annular elastomeric portion sandwiched between the outer and inner housings, wherein: the outer housing has an outer surface having a diameter to allow the outer housing to be securely held in an interference fit hole having a diameter which is less than the diameter of the outer surface of the outer housing; the housings and the annular elastomeric portion surround the equator of the ball; and the inner housing and the annular elastomeric portion are curved around the ball.

Preferably, the elastomeric portion is bonded to the inner housing.

Conveniently, the elastomeric portion is bonded to the inner housing by an injection process.

Advantageously, the elastomeric portion is bonded to the outer housing.

Preferably, a liner is provided on the inner housing in contact with the ball. Conveniently, the liner is a self-lubricating liner.

Advantageously, the inner housing and ball are both manufactured from metal and the inner housing is in direct contact with the ball. Preferably, the elastomeric portion is rubber.

In order that the present invention may be more readily understood, embodiments thereof will now be described, by way of example, with reference to the accompanying drawings, in which:
FIGURE 1 is a schematic cross-section of a spherical bearing arrangement not in accordance with the present invention; and
FIGURE 2 is a spherical bearing arrangement embodying the present invention.

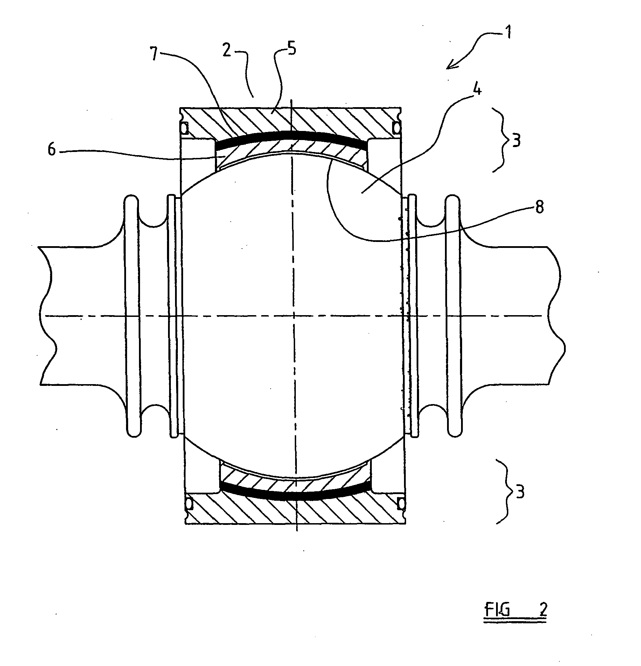

Referring now to Figure 2 of the drawings, a bearing arrangement 1 embodying the present invention is shown and comprises a spherical bearing 2 having a bearing housing 3 and a ball 4 located therein, the bearing housing 3 having a rigid steel outer housing 5 and a rigid steel inner housing 6 between which is sandwiched an annular elastomeric portion 7, in this example, a rubber sleeve bonded to both housings 5,6. The outer housing 5 of the bearing housing may be securely held in an interference fit hole (being an interference fit hole because the internal diameter of the hole is less than the outer diameter of the outer housing 5).

Preferably, a self-lubricating liner 8 is provided on the inner surface of the inner housing 6 in contact with the ball 4. Alternatively, the inner housing 6 and ball 4 may be in direct contact with one another.

The bearing is manufactured as follows. Firstly, the inner housing 6 is swaged onto the ball 4. The elastomeric portion 7, the rubber layer, is then bonded to the inner housing, preferably by an injection process. 4. Finally, the outer housing 5 is swaged onto the inner housing 6, sandwiching the rubber layer 7 between the housings 5,6. Preferably, in addition to being swaged onto the rubber layer 7 around the inner housing 6, a layer of adhesive is applied between the outer housing 5 and rubber layer 7 by which the rubber layer 7 is bonded to the outer housing 5.

The liner 8 is not essential - the inner housing 6 and the ball 4 are both happily manufactured from a metal or metal alloy with the inner housing in direct contact with the ball.

The resultant hybrid bearing housing 3 has three main components, none of which need be multi-part components and, because of the small number of components, there is a significant space saving because the size of the outer diameter of the housing has been reduced. Comparing the example of the invention shown in Figure 2 with the conventional hybrid bearing shown in Figure 1, it will be appreciated that the invention allows the entire middle housing 102 shown in Figure 1 to be dispensed with by adopting a simpler manufacturing process which leads to a reduction in the diameter of the bearing housing.

The spherical bearing has inner and outer housings 5, 6 between which are sandwiched the annular elastomeric portion. The housings and the elastomeric portion surround, capture and house the ball. Referring to Figure 2 of the drawings, it will be noted that the ball has a diameter and the housings and the annular elastomeric portion surround that diameter at the equator of the ball. Both the inner housing and the elastomeric portion are curved around the ball - again see Figure 2. It should be noted that, due to the curvature of the elastomeric portion and the inner housing around the ball, the spherical bearing embodying the present invention is able to absorb relative movement between the ball and the outer housing both in the radial direction and in the axial direction. Thus, in embodiments of the invention, because of the curvature of the elastomeric portion, there is also an element of compression of the elastomeric element between the inner and outer housings during any axial loading on the spherical bearing.

In the present specification "comprises" means "includes or consists of" and "comprising" means "including or consisting of".

## Claims

1. A method of manufacturing a spherical bearing (2) comprising the steps of:
swaging an inner housing (6) onto a ball (4) to curve the inner housing (6) around the ball (4) and surround the equator of the ball (4); providing an annular elastomeric portion (7) around an outer surface of the inner housing (6), the annular elastomeric portion (7) also curving around the ball (4) and surrounding the equator of the ball (4); and swaging an outer housing (5) onto the elastomeric portion (7).

2. A method according to Claim 1, wherein the step of providing the annular elastomeric portion (7) around the outer surface of the inner housing (6) comprises bonding an elastomeric portion (7) to the outer surface of the inner housing (6).

3. A method according to Claim 2, wherein the elastomeric portion (7) is applied by an injection process.

4. A spherical bearing arrangement having a bearing housing (3) and a ball (4) located therein, the bearing housing (3) having an outer housing (5), an inner housing (6) and an annular elastomeric portion (7) , **characterised in that** the annular elastomeric portion is sandwiched between the outer (5) and inner (6) housings, wherein: the outer housing (5) has an outer surface having a diameter to allow the outer housing (5) to be securely held in an interference fit hole having a diameter which is less than the diameter of the outer surface of the outer housing (5); the housings (5, 6) and the annular elastomeric portion (7) surround the equator of the ball (4); and the inner housing (6) and the annular elastomeric portion (7) are curved around the ball (4).

5. A bearing arrangement according to Claim 4, wherein the elastomeric portion (7) is bonded to the inner housing (6).

6. A bearing arrangement according to Claim 5, wherein the elastomeric portion (7) is bonded to the inner housing (6) by an injection process.

7. A bearing arrangement according to any one of Claims 4 to 6, wherein the elastomeric portion (7) is bonded to the outer housing (5).

8. A bearing arrangement according to any one of Claims 4 to 7, wherein a liner is provided on the inner housing (6) in contact with the ball (4).

9. A bearing arrangement according to Claim 8, wherein the liner is a self-lubricating liner.

10. A bearing arrangement according to any one of Claims 4 to 7, wherein the inner housing (6) and ball (4) are both manufactured from metal and the inner housing is in direct contact with the ball.

11. A bearing arrangement according to any one of Claims 4 to 10, wherein the elastomeric portion (7) is rubber.

## Patentansprüche

1. Verfahren zur Herstellung eines Kugellagers (2), das folgende Schritte umfasst:
Fassonschmieden eines Innengehäuses (6) auf einer Kugel (4), um das Innengehäuse (6) um die Kugel (4) herum zu krümmen und den Äquator der Kugel (4) zu umgeben; Bereitstellen eines ringförmigen elastomeren Abschnitts (7) um eine Außenfläche des Innengehäuses (6), wobei der ringförmige elastomere Abschnitt (7) ebenfalls um die Kugel (4) herum gekrümmt wird und den Äquator der Kugel (4) umgibt; und Fassonschmieden eines Außengehäuses (5) auf dem elastomeren Abschnitt (7).

2. Verfahren nach Anspruch 1, wobei der Schritt des Bereitstellens des ringförmigen elastistomeren Abschnitts (7) um die Außenfläche des Innengehäuses (6) das Binden eines elastomeren Abschnitts (7) an die Außenfläche des Innengehäuses (6) umfasst.

3. Verfahren nach Anspruch 2, wobei der elastomere Abschnitt (7) durch ein Spritzverfahren angebracht wird.

4. Kugellageranordnung, die Folgendes aufweist: ein Lagergehäuse (3) und eine darin angeordnete Kugel (4), wobei das Lagergehäuse (3) Folgendes aufweist: ein Außengehäuse (5), ein Innengehäuse (6) und einen ringförmigen elastomeren Abschnitt (7), **dadurch gekennzeichnet, dass** der ringförmige elastomere Abschnitt zwischen dem Außengehäuse (5) und dem Innengehäuse (6) angeordnet ist, wobei: das Außengehäuse (5) eine Außenfläche mit einem Durchmesser aufweist, der dem Außengehäuse (5) ermöglicht, fest in einem Presssitzloch gehalten zu werden, das einen Durchmesser aufweist, der geringer als der Durchmesser der Außenfläche des Außengehäuses (5) ist; die Gehäuse (5, 6) und der ringförmige elastomere Abschnitt (7) umgeben den Äquator der Kugel (4); und das Innengehäuse (6) und der ringförmige elastomere Abschnitt (7) sind um die Kugel (4) herum gekrümmt.

5. Lageranordnung nach Anspruch 4, wobei der elastomere Abschnitt (7) an das Innengehäuse (6) gebunden ist.

6. Lageranordnung nach Anspruch 5, wobei der elastomere Abschnitt (7) mit Hilfe eines Spritzverfahrens an das Innengehäuse (6) gebunden ist.

7. Lageranordnung nach einem der Ansprüche 4 bis 6, wobei der elastomere Abschnitt (7) an das Außengehäuse (5) gebunden ist.

8. Lageranordnung nach einem der Ansprüche 4 bis 7, wobei eine Lagerschale auf dem Innengehäuse (6) in Kontakt mit der Kugel (4) vorgesehen ist.

9. Lageranordnung nach Anspruch 8, wobei die Lagerschale eine selbstschmierende Lagerschale ist.

10. Lageranordnung nach einem der Ansprüche 4 bis 7, wobei das Innengehäuse (6) und die Kugel (4) beide aus Metall hergestellt sind und das Innengehäuse in direktem Kontakt mit der Kugel steht.

11. Lageranordnung nach einem der Ansprüche 4 bis 10, wobei der elastistomere Abschnitt (7) Gummi ist.

## Revendications

1. Un procédé pour fabriquer un palier sphérique (2) comportant les étapes de :
sertir un logement interne (6) sur une bille (4) afin de recourber le logement interne (6) autour de la bille (4) et d'entourer l'équateur de la bille (4) ; fournir une portion élastomère annulaire (7) autour d'une surface externe du logement interne (6), la portion élastomère annulaire (7) se recourbant également autour de la bille (4) et entourant l'équateur de la bille (4) ; et sertir un logement externe (5) sur la portion élastomère (7).

2. Un procédé selon la revendication 1, dans lequel l'étape de fournir la portion élastomère annulaire (7) autour de la surface externe du logement interne (6) comporte coller une portion élastomère (7) à la surface externe du logement interne (6).

3. Un procédé selon la revendication 2, dans lequel la portion élastomère (7) est appliquée par un processus d'injection.

4. Un agencement de palier sphérique ayant un logement de palier (3) et une bille (4) située à l'intérieur de celui-ci, le logement de palier (3) ayant un logement externe (5), un logement interne (6) et une portion élastomère annulaire (7), **caractérisé en ce que** la portion élastomère annulaire est prise en sandwich entre les logements externe (5) et interne (6), dans lequel : le logement externe (5) a une surface externe ayant un diamètre qui permet au logement externe (5) d'être solidement maintenu dans un trou à ajustement serré ayant un diamètre qui est inférieur au diamètre de la surface externe du logement externe (5) ; les logements (5, 6) et la portion élastomère annulaire (7) entourent l'équateur de la bille (4) ; et le logement interne (6) et la portion élastomère annulaire (7) sont recourbés autour de la bille (4).

5. Un agencement de palier selon la revendication 4, dans lequel la portion élastomère (7) est collée au logement interne (6).

6. Un agencement de palier selon la revendication 5, dans lequel la portion élastomère (7) est collée au logement interne (6) par un processus d'injection.

7. Un agencement de palier selon n'importe laquelle des revendications 4 à 6, dans lequel la portion élastomère (7) est collée au logement externe (5).

8. Un agencement de palier selon n'importe laquelle des revendications 4 à 7, dans lequel une garniture est fournie sur le logement interne (6) en contact avec la bille (4).

9. Un agencement de palier selon la revendication 8, dans lequel la garniture est une garniture autolubrifiante.

10. Un agencement de palier selon n'importe laquelle des revendications 4 à 7, dans lequel le logement interne (6) et la bille (4) sont tous les deux fabriqués en métal et le logement interne est en contact direct avec la bille.

11. Un agencement de palier selon n'importe laquelle des revendications 4 à 10, dans lequel la portion élastomère (7) est en caoutchouc.
